# EUROPÄISCHE PATENTANMELDUNG

(11) **EP 4 249 154 A1**
(43) Veröffentlichungstag der Anmeldung: **27.09.2023**
(21) Anmeldenummer: 22163508.9
(22) Anmeldetag: 22.03.2022
(51) Int. Cl.: B23B 31/16

(54) **SPANNFUTTER**

(71) Anmelder: SMW-AUTOBLOK Spannsysteme GmbH, 88074 Meckenbeuren (DE)
(72) Erfinder:
(74) Vertreter: Christ, Niko

(57) **Zusammenfassung**

Bei einem Spannfutter (1), durch das Werkstücke (2) vereinzelt und zentriert zu deren Bearbeitung durch eine Werkzeugmaschine an dieser abgestützt sind, mit einem Futterkörper (3) und mindestens vier in diesem eingearbeiteten Führungsnuten (4), die radial ausgerichtet sind, mit mindestens vier Spannbacken (5, 6, 7, 8), die jeweils paarweise in einer X- oder Y-Ebene angeordnet und vereinzelt in eine der Führungsnuten (4) beweglich gelagert eingesetzt sind, mit einem in dem Futterkörper (3) gelagerten Antriebselement (9), durch das die vier Spannbacken (5, 6, 7, 8) synchron in Richtung des einzuspannenden Werkstückes (2) zugestellt oder von diesem wegbewegt sind, mit jeweils einer zwischen dem Antriebselement (9) und zwei benachbarten Spannbacken (5, 7 oder 6, 8) vorgesehenen Wippe (11), die einen Symmetrie-Mittelpunkt (12) aufweist, in den ein an dem Antriebselement (9) verschwenkbar gelagerter Bolzen (13) eingesetzt ist, um den die Wippe (11) in Abhängigkeit von der Anlage der Spannbacken (5, 6 oder 7, 8) an dem Werkstück (2) verschwenkbar ist, soll zwischen zwei benachbarten Spannbacken (5, 6, 7,8) ein Bewegungsausgleich stattfinden, durch den die verschiedenen Spannbacken (5, 6, 7, 8) zeitsparend und ohne Demontage des Futterkörpers (3) auswechselbar sind. Dies ist dadurch erreicht, dass zwischen dem Antriebselement (9) und der jeweiligen Spannbacke (5, 6, 7, 8) eine Keilstange (31) und/oder ein Treibring vorgesehen ist, die jeweils trieblich mit dem Antriebselement (9) und einer der Spannbacken (5, 6, 7, 8) gekoppelt ist.

## Beschreibung

Die Erfindung bezieht sich auf ein Spannfutter, durch das Werkstücke vereinzelt und zentriert zu deren Bearbeitung durch eine Werkzeugmaschine an dieser abgestützt sind, nach dem Oberbegriff des Patentanspruches 1.

Üblicherweise bestehen die Spannbacken aus einer in dem Futterkörper radial beweglich gelagerten und dort abgestützten Grundbacke und einer Aufsatzbacke, die lösbar an der Grundbacke beispielsweise mittels Befestigungsschrauben arretiert ist. Da an der Grundbacke mehrere Gewindebohrungen vorgesehen sind, können derartige Aufsatzbacken an verschiedene Positionen an der Grundbacke montiert sein, sodass ein unterschiedlich groß bemessener Durchmesser für den von den Aufsatzbacken gebildeten Grundkreis entsteht. Der Durchmesser des Grundkreises ist dabei etwas größer bemessen als der Durchmesser des zu bearbeitenden Werkstückes, denn der Zustellweg der Aufsatzbacken soll möglichst gering gehalten sein.

Beispielsweise ist eine solche Spannvorrichtung, die unter dem Fachbegriff Spannfutter bekannt ist, aus der DE 10 2015 204 502 B4 zu entnehmen. Zwischen den Grundbacken und einer mechanisch betätigbaren Antriebseinheit ist eine Wippe und ein Mitnehmer vorgesehen, die jeweils mit einer der Wippen trieblich verbunden sind. Darüber hinaus ist ein Koppelring im Zentrum des Spannfutters angeordnet, an dem die vier Mitnehmer angebracht sind, derart, dass zwischen diesen Bauteilen in radialer Richtung ein Bewegungsspiel vorhanden ist. Der Koppelring ist drehbar um die Spannachse in dem Futterkörper oder Gehäuse des Spannfutters gelagert. Durch Verdrehen des Koppelrings entsteht dabei eine radiale Zustellbewegung der Grundbacke, so dass ein Werkstück durch die vier Spannbacken gehalten ist, da diese in Richtung des Werkstückes fahren und eine Spannkraft erzeugen.

Da die Einspannung eines Werkstückes mittels vier paarweise diametral gegenüberliegender Spannbacken eine mechanische Überbestimmung darstellt, ist das Bewegungsspiel zwischen dem Koppelring und dem jeweiligen Mitnehmer vorzusehen. Wenn nämlich eines der Paare der Spannbacken früher an das einzuspannende Werkstück auftrifft, ist deren Zustellbewegung zu stoppen, um zu gewährleisten, dass die dazu senkrecht verlaufenden Spannbacken die noch vorhandene Distanz zwischen diesen und der Oberfläche des Werkstückes zurücklegen können. Erst wenn sämtliche der vier Spannbacken an der Oberfläche des Werkstückes anliegen, soll eine entsprechende Spannkraft erzeugt sein. Das Bewegungsspiel dient somit als Ausgleich für die Spannbacken, wenn diese in Richtung des Werkstückes bewegt sind. Insbesondere wenn die Werkstücke eine rechteckförmige Außenkontur aufweisen, so dass deren Seitenlängen unterschiedlich bemessen sind, entsteht die Notwendigkeit, diese unterschiedlichen Distanzen zwischen den Paaren von diametral gegenüberliegenden Spannbacken auszugleichen.

Aufgrund des erforderlichen Bewegungsspiels zwischen dem Koppelring und dem Mitnehmer, die mechanisch mit den Grundbacken bzw. Spannbacken gekoppelt sind, entsteht jedoch oftmals eine erhebliche Ungenauigkeit, so dass die Positionierung des Werkstückes fehlerhaft ist. Dies wiederum führt zu Bearbeitungsfehlern an dem Werkstück selbst, da die Wiederholungsgenauigkeit des Einspannens von einer Vielzahl von identischen Werkstücken nicht gewährleistet werden kann.

Durch EP 3 623 085 A1 ist ein Spannfutter bekannt geworden, bei dem zwischen zwei benachbarten Spannbacken jeweils eine Wippe angeordnet ist, durch die Ausgleichsbewegungen entstehen, wenn zwei gegenüberliegende Spannbacken zuerst in Wirkkontakt mit dem einzuspannenden Werkstück gelangen. Die Zustellbewegung des Axialkolbens ist nämlich erst dann zu stoppen, wenn die erforderliche Spannkraft durch diesen auf sämtliche der vier Spannbacken erzeugt ist. Mittels des Spannfutters sollen nicht nur runde sondern vielmehr auch rechteckförmige Werkstücke einzuspannen sein, deren Seitenlängen unterschiedlich bemessen sind. Somit gelangen zwei gegenüberliegende Spannbacken zuerst in Wirkkontakt mit dem Werkstück und die beiden dazu benachbarten Spannbacken sind weiterhin durch das Antriebselement zuzustellen. Erst wenn sämtliche vier Spannbacken auf der Oberfläche des Werkstückes aufliegen, und das Antriebselement weiter zugestellt ist, wird die Spannkraft aufgebaut, durch die das Werkstück zwischen den vier Spannbacken zentriert gehalten ist.

Als nachteilig bei derartigen Spannvorrichtungen hat sich herausgestellt, dass die Grundbacke bzw. die jeweilige Spannbacke fest mit dem Antriebselement arretiert ist. Dies erfolgt beispielsweise mittels Keilhaken oder sonstigen Befestigungsmitteln. Folglich ist die Spannbacke von dem Antriebselement nicht ohne Weiteres zu lösen, denn der Futterkörper ist vollständig zu demontieren, um die jeweilige Grundbacke bzw. Spannbacke von dem Antriebselement lösen zu können. Sollten jedoch unterschiedlich groß bemessene Werkstücke in einer raschen Abfolge zu bearbeiten sein, ist es nachteiligerweise zwingend erforderlich, den jeweiligen Satz von Aufsatzbacken auszutauschen und den von diesen gebildeten Grundkreis an die Durchmesserkontur des zu bearbeitenden Werkstückes anzupassen. Demnach sind die Aufsatzbacken bei unterschiedlichen Durchmessern permanent an den vorgegebenen Durchmesser des Werkstückes durch entsprechendes Ausdrehen anzupassen. Im Übrigen sollte der Spannvorgang bei baugleichen Werkstücken wiederholungsgenau sein, um eine möglichst identische Zentrierung und damit geringe Bearbeitungstoleranzen an dem Werkstück zu erreichen.

Darüber hinaus ist nachteilig, dass jeder Satz von Aufsatzbacken ausschließlich für eine bestimmte Durchmessergröße von Werkstücken verwendbar ist. Sobald die Bauformen der Werkstücke voneinander abweichen, sind zeitaufwendige Montage-und Demontagearbeiten erforderlich, um die Spannvorrichtung bzw. das Spannfutter an den jeweiligen Einsatzzweck anzupassen.

Es ist zwar seit vielen Jahren bekannt, solche Nachteile durch ein sogenanntes Schnellwechselsystem für Spannfutter zu beheben. Beispielsweise ist durch die DE 19 502 363 C1 ein solches Schnellwechselsystem für Spannfutter beschrieben.

Allerdings weist dieses Spannfutter keine Ausgleichsmöglichkeiten auf, sodass dieses nachteiligerweise ausschließlich für Werkstücke einsetzbar ist, die einen runden oder quadratischen Querschnitt aufweisen. Werkstücke mit unterschiedlich groß bemessenen Seiten sind mittels dieser Spannfutter nicht zu bearbeiten, da diese Spannfutter keinerlei Ausgleichsmöglichkeiten für die Zustellbewegung der jeweiligen Spannbacken aufweisen.

Es ist daher Aufgabe der Erfindung, ein Spannfutter der eingangs genannten Gattung mit einem Bewegungsausgleich zwischen zwei benachbarten Spannbacken derart weiterzubilden, dass die verwendeten Spannbacken zeitsparend und ohne Demontage des Futterkörpers auswechselbar sind, um unterschiedlich groß bemessene Werkstücke, gegebenenfalls mit unterschiedlichen Seitenlängen, einspannen und anschließend durch die Werkzeugmaschine bearbeiten zu können.

### Diese Aufgabe ist erfindungsgemäß durch die Merkmale des kennzeichnen Teils von Patentanspruch 1 gelöst.

Weitere vorteilhafte Weiterbildungen der Erfindung sind in den Unteransprüchen beansprucht.

Dadurch, dass zwischen dem Antriebselement und der jeweiligen Spannbacke eine Keilstange und/oder ein Treibring vorgesehen ist, die jeweils trieblich mit dem Antriebselement und einer der Spannbacken gekoppelt ist, soll der Austausch der zweiteiligen Spannbacken, die nämlich als Grund- und Aufsatzbacken ausgestaltet sind, möglichst zeitsparend und exakt angepasst an die Außenkontur des zu bearbeitenden Werkstückes ermöglicht sein.

Es ist besonders vorteilhaft, wenn die Führungsnuten der jeweiligen Spannbacken im Bereich der Mantelfläche des Futterkörpers offen sind, denn dadurch kann zum einen die Grundbacke zumindest teilweise aus dem Umfangsbereich des Futterkörpers überstehen und folglich zunächst an einer exakt vorgegebenen Position mit der jeweiligen Keilstange in eine triebliche Wirkverbindung gesetzt werden. Bereits durch diese Maßnahme kann die Grundbacke auf den Durchmesser des zu bearbeitenden Werkstückes bzw. auf dessen rechteckförmige Außenkontur derart eingestellt sein, dass der Zustellweg der jeweiligen Aufsatzbacke möglichst gering ist, um in Wirkkontakt mit der Oberfläche des einzuspannenden Werkstückes zu gelangen. Darüber hinaus kann die Grundbacke zum anderen aus der Führungsnut herausgezogen bzw. entnommen sein, wenn die triebliche Wirkverbindung zwischen dieser und der Keilstange gelöst bzw. aufgehoben ist. Die Keilstange wird dabei in der jeweiligen Führungstasche derart weit weg von der Grundbacke bzw. Spannbacke durch die Bewegung des Antriebselements gezogen, dass die auf der Keilstange eingearbeitete Schrägverzahnung mit der an der Grundbacke und der Keilstange zugewandten Oberfläche eingearbeiteten Schrägverzahnung außer Eingriff gelangt, wodurch die jeweilige Grundbacke freigegeben ist. Somit kann nach dem Lösen der Grundbacke von der Keilstange, die Grundbacke aus dem Futterkörper herausgezogen und durch eine geometrisch andersartige Grundbacke ersetzt werden.

Mittels eines Arretierbolzens oder einer mechanischen Arretierfunktion ist es möglich, die jeweilige Position der Grundbacke bezogen auf einen vorgegebenen gemeinsamen Grundkreis um das Zentrum des Futterkörpers auszurichten und dort zuverlässig zu halten, und zwar solange bis die jeweilige Keilstange in Richtung der Grundbacke zugestellt und die miteinander korrespondierenden Schrägverzahnungen in der Keilstange und der Grundbacke in Eingriff gebracht sind. Sobald die Schrägverzahnungen ineinandergreifen und die Keilstange durch das Antriebselement weiter axial bewegt ist, entsteht eine radiale Zustellbewegung der jeweiligen Grundbacken und somit der auf dieser montierten Aufsatzbacken in Richtung des Zentrums des Futterkörpers bzw. in Richtung des einzuspannenden Werkstückes.

Sollten die verwendeten Aufsatzbacken in einem unterschiedlichen Zeitabstand auf die Oberfläche des einzuspannenden Werkstückes auftreffen, wird zunächst die Bewegung der jeweiligen auf die Oberfläche des Werkstückes aufgesetzte Aufsatzbacke gestoppt, denn die zwischen den benachbarten Spannbacken vorgesehene Wippe führt eine Ausgleichsbewegung durch, wodurch die von dem Werkstück noch entfernt angeordnete Spannbacke weiterhin in Richtung des Werkstückes zugestellt ist. Erst wenn sämtliche Spannbacken auf der Oberfläche des Werkstückes anliegen, erzeugt das Antriebselement die erforderliche Spannkraft, denn dieser wird weiterhin axial betätigt und die Ausgleichsbewegungen der Wippen sind aufgrund der vorhandenen kompletten Anlage der Spannbacken an dem Werkstück vollständig gestoppt bzw. die Ausgleichsbewegung der Wippe kann aufgrund der Festlegung der Spannbacken an dem Werkstück nicht mehr ausgeführt werden.

In der Zeichnung ist ein erfindungsgemäßes Spannfutter dargestellt, das nachfolgend näher erläutert ist. Im Einzelnen zeigt:
- Figur 1: ein Spannfutter mit einem Futterkörper, in dem vier senkrecht zueinander ausgerichtete Spannbacken radial verschiebbar gelagert sind, durch die ein rechteckförmig ausgestaltetes Werkstück zentriert im Raum gehalten ist, in Draufsicht,
- Figur 2a: das Spannfutter gemäß Figur 1, entlang der Schnittlinie IIa-IIa, wobei in dem Futterkörper vier Führungstaschen eingearbeitet sind, in denen jeweils eine Keilstange mit einer Schrägverzahnung axial beweglich gelagert ist und die in trieblicher Wirkverbindung mit einer der Spannbacken steht, im Spannzustand
- Figur 2b: das Spannfutter gemäß Figur 2a in Draufsicht und mit einem Aufbruch, durch den ersichtlich ist, dass die Führungstaschen der Keilstange tangential um einen um das Zentrum des Futterkörpers virtuell verlaufenden Grundkreises ausgerichtet sind,
- Figur 2c: das Spannfutter gemäß Figur 2b unmittelbar bevor das Werkstück zwischen den Spannbacken gehalten ist,
- Figur 2d: das Spannfutter gemäß Figur 2c mit den vier Keilstangen, die außer Eingriff mit den vier Spannbacken stehen und wobei eine der Spannbacken aus deren Führungsnut herausgezogen ist, um diese auszuwechseln,
- Figur 3a: das Spannfutter gemäß Figur 2a entlang der Schnittlinie IIIa-IIIa mit einer zwischen zwei benachbarten Spannbacken angeordneten Wippe als Bewegungsausgleich zwischen diesen beiden Spannbacken während der axialen Zustellung,
- Figur 3b: das Spannfutter gemäß Figur 3a im belasteten Zustand, wobei eine der Spannbacken bereits in Wirkkontakt mit dem einzuspannen Werkstück steht und die dazu benachbarte Spannbacke von dem Werkstück beabstandet ist.

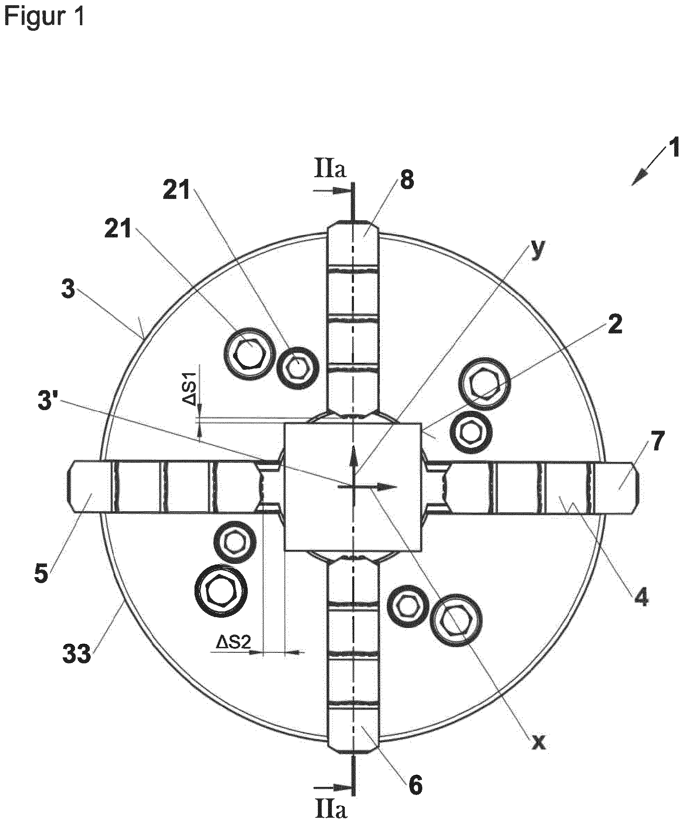

In Figur 1 ist ein Spannfutter 1 abgebildet, durch das ein rechteckförmiges oder rundes Werkstück 2 zentriert im Raum zur Bearbeitung durch eine nicht dargestellte Werkzeugmaschine abgestützt ist. Das Spannfutter 1 besteht aus einem Futterkörper 3, an dem vier Spannbacken 5, 6, 7 sowie 8 verfahrbar gelagert sind. Die jeweilige Spannbacke 5, 6, 7, 8 ist in jeweils einer in den Futterkörper 3 eingearbeitete Führungsnut 4 axial beweglich gelagert.

Die Spannbacken 5 und 6 sind in einer X-Ebene, also diametral gegenüberliegend und die Spannbacken 7 und 8 in einer senkrecht dazu verlaufenen Y-Ebene angebracht. Die vier Spannbacken 5, 6, 7 und 8 werden radial in Richtung des Zentrums 3' des Futterkörpers 3, also in Richtung dessen Längsachse und in Richtung des Werkstückes 2 zugestellt. Wenn jedoch das einzuspannende Werkstück 2 eine trapezförmige oder sternförmige Außenkontur aufweist, dann können die Spannbacken 5, 6, 7, 8 in einer beliebigen Position angeordnet sein, so dass durch zwei der vier Spannbacken 5, 6 oder 7, 8 zwar eine der x- oder y- Ebene verläuft, diese Ebenen jedoch nicht senkrecht zueinander ausgerichtet sind.

Wenn das Werkstück 2 unterschiedliche Kantenlängen oder sonstige unterschiedliche Außenkonturen aufweist - dies ist schematisch durch ΔS1 sowie ΔS2 dargestellt - dann treffen die Paare von Spannbacken 5, 6 oder 7, 8 in einer unterschiedlichen Zeitspanne auf die Oberfläche des Werkstückes 2 auf. Wenn nämlich der Abstand ΔS1 größer bemessen ist als der Abstand ΔS2 zwischen den Spannbacken 5, 6 oder 7, 8, dann entsteht ein zeitlich unterschiedlicher Auftreffzeitpunkt. Die vier Spannbacken 5, 6, 7 und 8 werden jedoch synchron mittels eines Antriebselements 9 bewegt, so dass dieser räumliche oder zeitliche Versatz auszugleichen ist.

Das Antriebselement 9 kann dabei sowohl als axial beweglicher Kolben im Inneren des Futterkörpers 3 als auch als rotierender Treibring ausgestaltet sein. Der Kolben 9 bewegt sich linear hin und her und diese Bewegungen werden mittels Keilstangen 31 von dem Antriebselement 9 an den Spannbacken 5, 6, 7, 8 oder mittels der Rotation des Treibringes um eine Symmetrieachse oder des Zentrum 3' des Futterkörpers 3 übertragen.

An dem Treibring können dazu Schrägverzahnungen oder Keilhaken vorgesehen sein, um eine triebliche Wirkverbindung herzustellen.

Darüber hinaus ist es problematisch, das Werkstück 2 exakt fluchtend zu dem Zentrum 3' manuell oder maschinell zu positionieren. Oftmals liegt demnach der Symmetriemittelpunkt des Werkstückes 2 nicht fluchtend zu dem Zentrum 3' des Futterkörpers 3. Durch die Zustellung der Spannbacken 5, 6, 7 und 8 soll dieses Problem sowohl in der X- als auch in der Y-Ebene behoben sein, indem nämlich die vorhandenen Distanzunterschiede durch Verschieben des Werkstücks 2 ausgeglichen sind. Dies erfolgt dadurch, dass die diametral paarweise gegenüberliegenden Spannbacken 5, 6 oder 7, 8 das Werkstück 2 in der X- und/oder Y-Ebene verschieben, um den Symmetriemittelpunkt des Werkstückes 2 fluchtend zu dem Zentrum 3' des Futterkörpers 3 auszurichten. Sobald das Werkstück 2 zwischen zwei gegenüberliegenden Spannbacken 5, 6 oder 7, 8 eingespannt ist, ist dieses in der jeweiligen X- oder Y-Ebene positioniert.

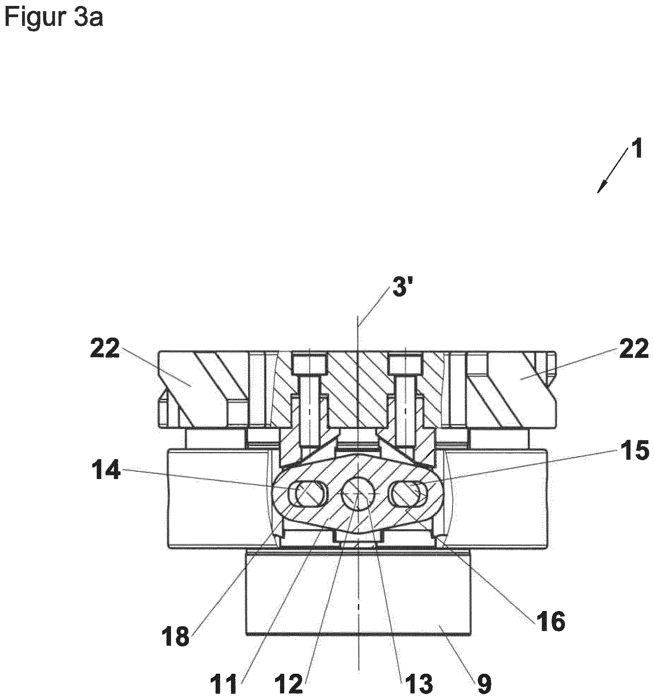

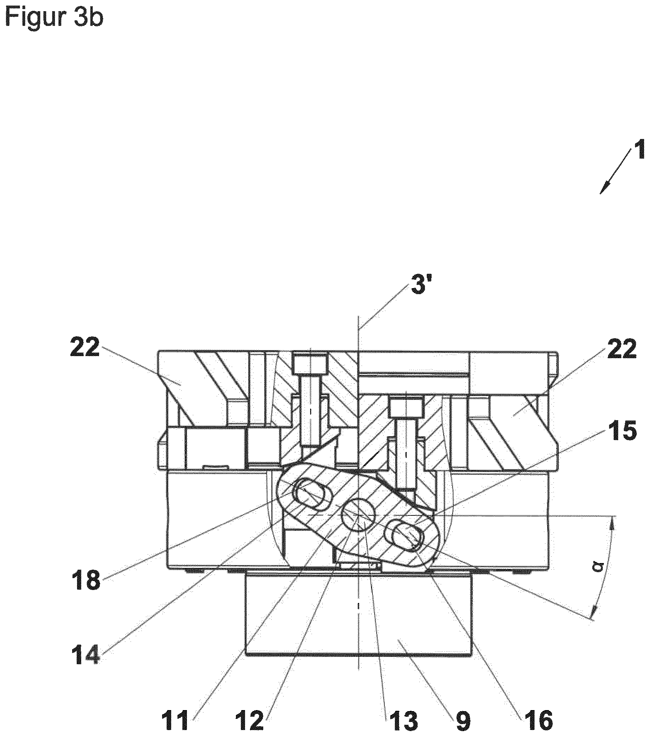

Wenn jedoch die Spannbacken 5, 6, 7 und 8 synchron durch ein Antriebselement 9 bewegt sind, dann ist die zeitliche Differenz des Auftreffens der Spannbacken 5, 6, 7 und 8 auf das Werkstück 2 auszugleichen. Dieser Zeit- oder Geometrie-Ausgleich ist den Figuren 3a und 3b detailliert zu entnehmen bzw. in der EP 3 623 085 A1 sowie DE 10 2019 100 089 B3, EP 3 028 794 A1 oder DE 10 2015 204 502 B4 beschrieben, auf die hiermit Bezug genommen ist.

Aus Figur 3a ist ersichtlich, dass in dem Antriebselement 9 vier Freiräume 23 eingearbeitet sind, in denen die vier Wippen 11 eingesetzt bzw. angeordnet sind, die einen Symmetriemittelpunkt 12 aufweisen. In dem Symmetriemittelpunkt 12 ist eine Aufnahmebohrung eingearbeitet, in die ein Bolzen 13 eingreift. Der Bolzen 13 ist dabei an dem Antriebselement 9 abgestützt. Die Wippe 11 ist zudem verschwenkbar an dem Bolzen 13 gelagert.

Seitlich neben dem Bolzen 13 sind in die Wippe 11 zwei Führungsnuten 16 eingearbeitet, die im unbetätigten Zustand der Wippe 11 senkrecht zu dem Zentrum 3' ausgerichtet sind. Dies bedeutet, dass die Wippe 11 im unbetätigten Zustand nicht ausgelenkt ist, sondern vielmehr senkrecht zu dem Zentrum 3' verläuft.

Aus Figur 3b ist die Betätigung der Wippe 11 und die Kraftübertragung zwischen dieser auf die jeweiligen Spannbacke 5, 6, 7 oder 8 zu entnehmen. In die jeweilige Führungsnut 16 ist nämlich ein erster und zweiter Übertragungsstift 14 bzw. 15 eingesetzt. Der erste Übertragungsstift 14 ist dabei den Spannbacken 5 und 6 und der zweite Übertragungsstift 15 den Spannbacken 7 und 8 zugeordnet und trieblich mit diesen jeweils gekoppelt.

Darüber hinaus sind an dem freien der Wippe 11 zugeordneten Ende der Übertragungsstifte 14 und 15 jeweils ein Kopf 17 vorgesehen, der in die jeweilige Führungsnut 16 linear verschiebbar eingesetzt ist. Die Außenkontur des Kopfes 17 ist dabei derart an die Innenkontur der Führungsnut 16 angepasst, dass die in Richtung der Längsachse 4 verlaufenden Stirnseiten an der Innenwand der Führungsnut 16 anliegen und dass zwischen den senkrecht zu der Längsachse 4 verlaufenden Stirnseiten der Köpfe 17 ein Freiraum oder Luftspalt vorhanden ist. Somit können die Köpfe 17 relativ zu der Führungsnut 16 senkrecht zur Längsachse 4 bewegt sein, und zwar dann, wenn die Wippe 11 um den Bolzen 13 in eine der beiden möglichen Auslenkungen bewegt ist. Gemäß Figur 4b trifft nämlich die Spannbacke 7 als erstes auf das Werkstück 2 auf, so dass die Spannbacke 5 weiter in Richtung des Werkstückes 2 zu bewegen ist. Demnach gleicht diese Zustelldifferenz zwischen den beiden Paaren von Spannbacken 7 und 8 einerseits sowie 5 und 6 andererseits die Wippe 11 durch die dargestellte Auslenkung α aus. Das Antriebselement 9 wird weg von dem einzuspannenden Werkstück 2 gezogen, so dass die bereits an dem Werkstück 2 anliegenden Spannbacken 7 und 8 in ihrer Position zu halten sind und die Differenz aus ΔS2 minus ΔS1 durch die Verschwenkung der Wippe 11 auszugleichen ist.

Des Weiteren sind in den vier Freiräumen 23 jeweils ein Übertragungskeil 22 als Distanzüberbrückung zwischen der Wippe 11 und der jeweiligen Spannbacke 5, 6, 7 oder 8 angeordnet. In dem jeweiligen Übertragungskeil 22 sind Durchgangsbohrungen 24 eingearbeitet, die von dem jeweiligen Übertragungsstift 14, 15 durchgriffen ist bzw. durch diesen hindurchragt.

Die Übertragungskeile 22 dienen als Puffer oder Kraftübertragung zwischen der Wippe 11 und den Spannbacken 5, 6, 7 oder 8 und sind linear beweglich in dem Futterkörper 3 verschiebbar gelagert.

Sobald alle vier Spannbacken 5, 6 oder 7 und 8 ihre Anlageposition an dem Werkstück 2 erreicht haben, erzeugt das Antriebselement 9 die eigentliche Spannkraft. Je weiter dieser angetrieben ist, desto höher ist die erzeugte Spannkraft. Die Wippe 11 und die unterschiedliche Anordnung der Übertragungsstifte 14, 15 wird dadurch nicht verändert, so dass diese in der eingenommenen Ausgleichslage verbleiben.

Durch das erfindungsgemäße Spannfutter 1 können somit Werkstücke 2 zentriert im Raum gehalten und zu deren Bearbeitung durch die Werkzeugmaschine abgestützt sein, die eine beliebige Außenkontur aufweisen, denn die Innenkontur der Spannbacken 5, 6, 7, 8 sind an die Außenkonturen der unterschiedlich ausgestalteten Werkstücke 2 angepasst und können diese teilweise umgreifen. Dies ist - wie nachfolgend detailliert erläutert - mittels der Positionierung der Spannbacken 5, 6, 7 und 8 in Bezug auf einen virtuellen um das Zentrum 3' verlaufenden Grundkreis erreicht. Dabei können die Spannbacken 5, 6, 7 oder 8 unterschiedlichen Grundkreisen zugeordnet sein.

Der zuvor beschriebene Bewegungsausgleich der vier Spannbacken 5, 6, 7 und 8 hat sich in der Praxis sehr bewährt. Jedoch gibt die Geometrie des jeweils einzuspannenden Werkstückes 2 einen bestimmten Grundkreis oder virtuellen Abstand um das Zentrum 3' des Futterkörpers 3 vor, denn die Bewegungsdistanzen der Spannbacken 5, 6, 7 und 8 sind begrenzt und an die Geometrie des Werkstückes 2 folglich exakt anzupassen. Wenn demnach eine bestimmte Bandbreite von Durchmessern unterschiedlicher Werkstücke 2 an dem Spannfutter 1 zu zentrieren oder die Werkstücke unsymmetrisch sind, ist für jedes dieser Werkstücke 2 ein eigenständiger Satz von Spannbacken 5, 6, 7 und 8 vorzuhalten und an das Spannfutter 1 zu montieren. Insbesondere die dem Werkstück 2 zugewandten Spannflächen der Spannbacken 5, 6, 7 und 8 sind aufeinander abzustimmen, sodass diese möglichst auf einem identischen virtuellen Grundkreis um das Zentrum 3' im Spannzustand positioniert sind. Bereits wenige Toleranzabweichungen in der Bearbeitung der Spannfläche der Spannbacken 5, 6, 7 und 8 führen zu Verschiebungen des Werkstückes 2 bezogen auf das Zentrum 3' des Futterkörpers 3, wodurch eine wiederholungsgenaue Positionierung baugleicher Werkstücke 2 ausgeschlossen ist.

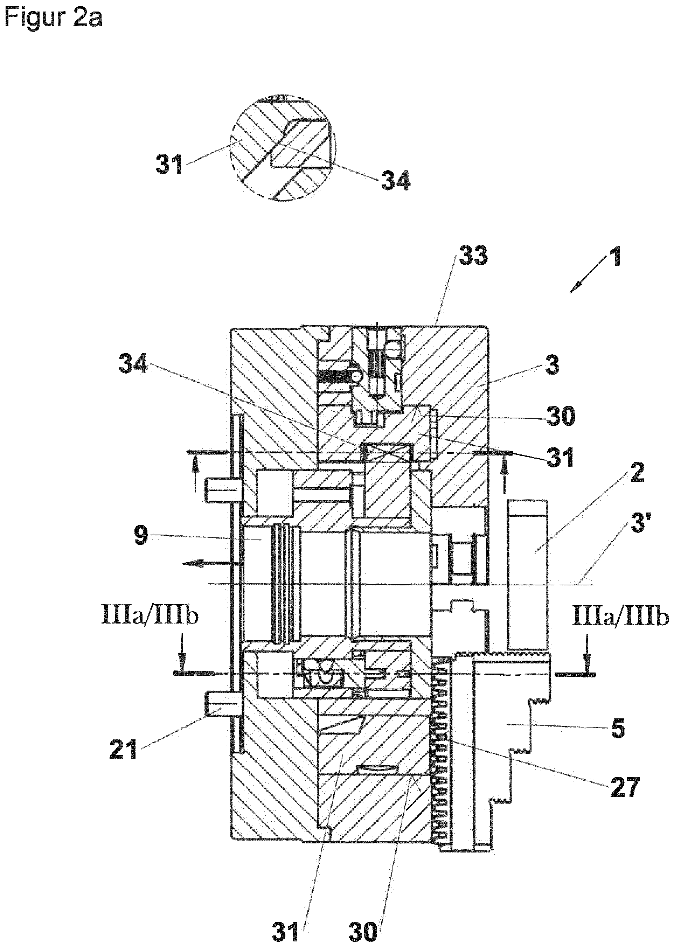

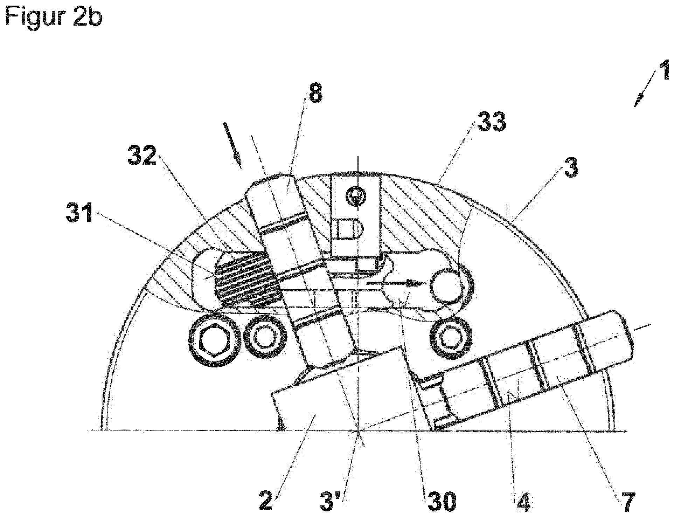

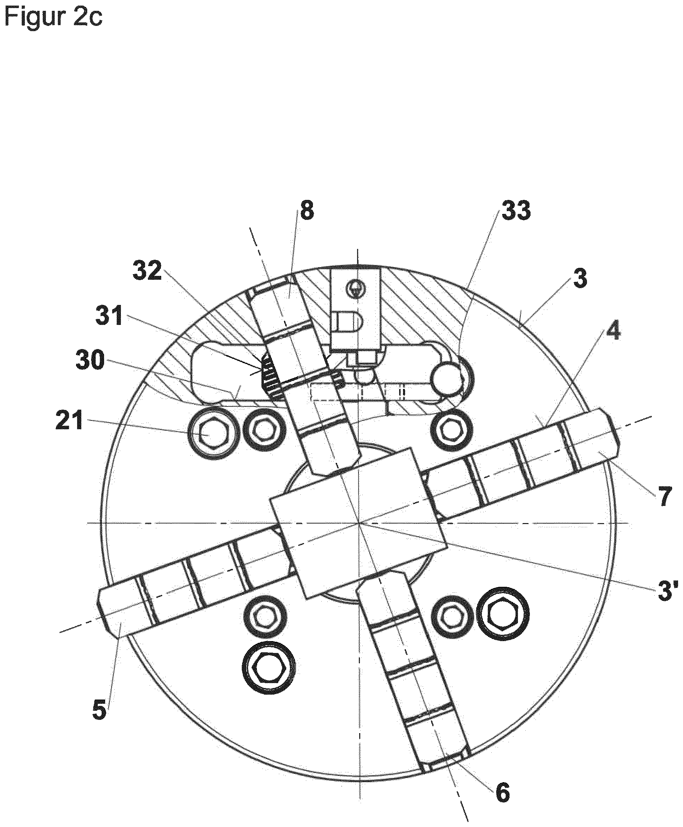

Um demnach mithilfe eines Satzes von Spannbacken 5, 6, 7 und 8 eine möglichst große Bandbreite von unterschiedlich groß bemessenen Werkstücken 2 zentriert und wiederholungsgenau an dem Spannfutter 1 einspannen zu können, ist die Antriebsart bzw. die triebliche Kopplung zwischen den Spannbacken 5, 6, 7 und 8 sowie dem Antriebselement 9 verbessert. Zwischen dem Antriebselement 9 und der jeweiligen Spannbacke 5, 6, 7 und 8 ist nunmehr eine Keilstange 31 zwischengeschaltet. Zunächst steht jede der Keilstangen 31 in einer trieblichen Wirkverbindung mit dem Antriebselement 9, denn die jeweilige Keilstange 31 ist mittels eines Keilhakens 34 trieblich mit der Keilstange 31 gekoppelt. Dies ist insbesondere in Figur 2a mit dem vergrößerten Aufbruch gezeigt.

Darüber hinaus sind in dem Futterkörper 3 vier Führungstaschen 30 eingearbeitet, die jeweils tangential um einen gemeinsamen virtuellen Grundkreis um das Zentrum 3' verlaufen. In jeder der Führungstaschen 30 ist eine der Keilstangen 31 axial beweglich angeordnet. Folglich bewegt sich jede der Keilstangen 31 in der jeweiligen Führungstasche 30, sobald das Antriebselement 9 axial bewegt ist. Dabei sind die Bewegungsgeschwindigkeiten und die zurückgelegten Strecken der Keilstange 31 miteinander identisch; diese verlaufen demnach synchron zueinander.

Jede der Keilstangen 31 ist gemäß den Figuren 2a bis 2d mit einer Schrägverzahnung 31, die als Kraftübertragungsmittel wirkt, versehen. Dabei bezieht sich der Verlauf der Schrägverzahnung 31 auf die Längsachse der jeweiligen Keilstange 31.

Jede der Spannbacken 5, 6, 7 und 8 besteht üblicherweise aus einer Grundbacke und einer an dieser anschraubbaren Aufsatzbacke, sodass die Positionen der Aufsatzbacken bezogen auf die Grundbacke in einem gewissen Montagebereich variabel einstellbar sind. Jede der Grundbacken bzw. der Spannbacken 5, 6, 7 und 8 weist eine im Inneren des Futterkörpers 3 angeordnete Schrägverzahnung 10 auf.

Die Neigung der beiden Schrägverzahnungen 10 und 32 sind identisch, sodass die Schrägverzahnung 32 der Keilstange 31 mit jeder der Schrägverzahnungen 10 der Spannbacken 5, 6, 7 und 8 in Eingriff bringbar ist. Demnach entsteht zwischen der jeweiligen Keilstange 31 und der Spannbacke 5, 6, 7, und 8 eine formschlüssige Wirkverbindung, sobald die Schrägverzahnungen 10 und 32 in Eingriff miteinander stehen.

Dies bedeutet, dass die Bewegungen der Keilstangen 31, die in der Führungstasche 30 tangential ausgerichtet sind, zu einer radialen Zustellbewegung der Spannbacken 5, 6, 7 und 8 aufgrund der Ausrichtung der Führungsnuten 4, in denen die Spannbacken 5, 6, 7 und 8 axial beweglich gelagert sind, sowie der gewählten Neigungen der Schrägverzahnungen 10 und 32 führen.

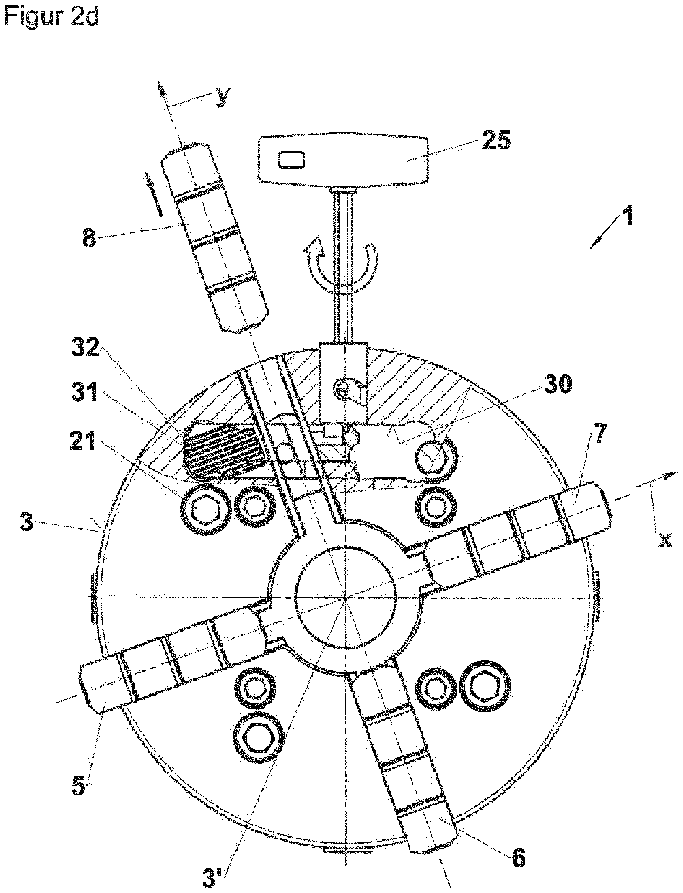

Insbesondere aus Figur 2d ist ersichtlich, dass die während des Spannvorganges erforderliche formschlüssige Wirkverbindung zwischen den Schrägverzahnungen 10 und 32 beim Auswechseln der Spannbacken 5, 6, 7 und 8 zu lösen ist. Dies erfolgt mittels eines Werkzeugs 25, durch das jede der Keilstangen 31 derart weit weg in der Führungstasche 30 von den Spannbacken 5, 6, 7 und 8 bewegt ist, dass sich die Schrägverzahnungen 10 und 32 außer Eingriff befinden. Sobald demnach keine formschlüssige oder kraftschlüssige Wirkverbindung mehr zwischen der Schrägverzahnung 10 der jeweiligen Spannbacke 5, 6, 7 und 8 und der Schrägverzahnung 32 der Keilstange 31 besteht, kann die jeweilige Spannbacke 5, 6,7 und 8 aus der Führungsnut 4 herausgezogen werden, denn die der Mantelfläche 33 des Futterkörpers 3 zugeordnete Stirnseite der Führungsnut 4 ist offen ausgestaltet.

Aufgrund der Bewegungsmöglichkeiten der Keilstange 31 im Inneren der Führungstaschen 30 können diese derart exakt positioniert werden, dass eine wiederholungsgenaue Anordnung der Spannbacken 5, 6, 7 und 8 einstellbar ist und gleichzeitig der jeweilige Durchmesser des zu bearbeitenden Werkstückes 2 berücksichtigt ist. Dies erfolgt dadurch, dass zunächst die Spannbacken 5, 6, 7 und 8 an einen gemeinsamen oder individuellen Grundkreis in der jeweiligen Führungsnut 4 bewegt und dort gehalten sind, denn die jeweilige Keilstange 31 ist derart weit weg von den Spannbacken 5, 6, 7 und 8 positioniert, dass diese frei beweglich in den Führungsnuten 4 verschiebbar sind. Mittels geeigneter Hilfsmittel, beispielsweise in Form von federbelasteten Stiften, Schablonen, bereits vorpositionierten einzuspannenden Werkstücken 2 oder dergleichen kann demnach die gemeinsame, einem virtuellen Grundkreis um das Zentrum 3' entsprechende Position der Spannbacken 5, 6, 7 und 8 eingestellt werden. Nach Erreichen dieser gewünschten Position der Spannbacken 5, 6, 7 und 8 werden die Keilstangen mittels des Werkzeugs 25 in der Führungstasche 30 in Richtung der Spannbacken 5, 6, 7 und 8 zugestellt, sodass die Schrägverzahnung 32 der Keilstange 31 in Eingriff mit der Schrägverzahnung 10 der Spannbacken 5, 6, 7 und 8 gelangt und die erforderliche formschlüssige Wirkverbindung zwischen diesen hergestellt ist. Im Anschluss daran kann das Antriebselement 9 die Keilstange 31 synchron betätigen, wodurch die radiale Zustellung der Spannbacken 5, 6, 7 und 8 erfolgt.

## Patentansprüche

1. Spannfutter (1), durch das Werkstücke (2) vereinzelt und zentriert zu deren Bearbeitung durch eine Werkzeugmaschine an dieser abgestützt sind,
- mit einem Futterkörper (3) und mindestens vier in diesem eingearbeiteten Führungsnuten (4), die radial ausgerichtet sind,
- mit mindestens vier Spannbacken (5, 6, 7, 8), die jeweils paarweise in einer X- oder Y-Ebene angeordnet und vereinzelt in eine der Führungsnuten (4) beweglich gelagert eingesetzt sind,
- mit einem in dem Futterkörper (3) gelagerten Antriebselement (9), durch das die vier Spannbacken (5, 6, 7, 8) synchron in Richtung des einzuspannenden Werkstückes (2) zugestellt oder von diesem wegbewegt sind,
- mit jeweils einer zwischen dem Antriebselement (9) und zwei benachbarten Spannbacken (5, 7 oder 6, 8) vorgesehenen Wippe (11), die einen Symmetrie-Mittelpunkt (12) aufweist, in den ein an dem Antriebselement (9) verschwenkbar gelagerter Bolzen (13) eingesetzt ist, um den die Wippe (11) in Abhängigkeit von der Anlage der Spannbacken (5, 6 oder 7, 8) an dem Werkstück (2) verschwenkbar ist,
**dadurch gekennzeichnet,**
**dass** zwischen dem Antriebselement (9) und der jeweiligen Spannbacke (5, 6, 7, 8) eine Keilstange (31) und/oder ein Treibring vorgesehen ist, die jeweils trieblich mit dem Antriebselement (9) und einer der Spannbacken (5, 6, 7, 8) gekoppelt ist.

2. Spannfutter nach Anspruch 1,
**dadurch gekennzeichnet,**
**dass** das jeweilige Kraftübertragungsmittel (32) der Keilstangen (31) als Schrägverzahnung ausgestaltet ist und dass an der der Keilstange (31) zugewandten Oberfläche der jeweiligen Spannbacke (5, 6, 7, 8) eine dazu korrespondierende Schrägverzahnung (33) eingearbeitet ist, die während des Bewegungsvorganges und des Spannzustandes der Spannbacken (5, 6, 7, 8) in einem formschlüssigen Eingriff miteinander stehen.

3. Spannfutter nach Anspruch 1 oder 2,
**dadurch gekennzeichnet,**
**dass** die Führungstasche (30) der jeweiligen Keilstange (31) tangential zu dem Zentrum (3') des Futterkörpers (3) angeordnet ist.

4. Spannfutter nach einem der vorgenannten Ansprüche,
**dadurch gekennzeichnet,**
**dass** die Führungsnuten (4) der Spannbacken (5, 6, 7, 8) im Bereich der äußeren Mantelfläche des Futterkörpers (3) offen sind und dass die jeweilige Spannbacke (5, 6, 7, 8) aus dem Eingriff der Keilstange durch deren Verschiebung von der Spannbacke (5, 6, 7, 8) weg lösbar ist, derart, dass die jeweilige Spannbacke freigegeben und aus der jeweiligen Führungsnut (4) entfernbar bzw. in diese einschiebbar ist.

5. Spannfutter nach einem der vorgenannten Ansprüche,
**dadurch gekennzeichnet,**
**dass** die jeweilige Keilstange (31) mittels eines Keilhakens (34), einer Schrägverzahnung oder mittels eines Befestigungsstiftes lageorientiert mit dem Antriebselement (9) verbunden ist, derart, dass die Bewegung des Antriebselement (9) die Bewegungsgrenzen der jeweiligen Keilstange (31) vorgibt bzw. diese begrenzt.

6. Spannfutter nach einem der vorgenannten Ansprüche,
**dadurch gekennzeichnet,**
**dass** die jeweilige Spannbacke (5, 6,7, 8) in der jeweiligen Führungsnut (4) mittels eines Arretierungsstiftes in Bezug auf einen gemeinsamen Grundkreis um das Zentrum (3') des Futterkörpers (3) festgesetzt ist, während die Schrägverzahnung (32) der Keilstange (31) außer Eingriff mit der Schrägverzahnung (10) der jeweiligen Spannbacke (5, 6,7, 8) ist.

7. Spannfutter nach einem der vorgenannten Ansprüche,
**dadurch gekennzeichnet,**
- **dass** seitlich benachbart zu dem Bolzen (13) ein Übertragungsstift (14, 15) angeordnet ist, der trieblich mit der Wippe (11) gekoppelt ist, und an dessen der Wippe (11) gegenüberliegenden Ende die jeweilige Spannbacke (5, 6, 7 oder 8) gelagert und abgestützt ist,
- **dass** zwischen der Wippe (11) und der jeweiligen Spannbacke (5, 6, 7 oder 8) ein Übertragungskeil (22) als Distanzüberbrückung angeordnet ist,
- und **dass** in dem Übertragungskeil (22) eine Durchgangsbohrung (24) eingebracht ist, die von dem jeweiligen Übertragungsstift (14, 15) durchgriffen ist bzw. durch diesen hindurchdringt.

8. Spannfutter nach einem der vorgenannten Ansprüche,
**dadurch gekennzeichnet,**
**dass** die Keilstange (31) in einer in dem Futterkörper (3) eingearbeiteten Führungstasche (30) axial beweglich gelagert ist,
und **dass** die jeweilige Keilstange (31) ein Kraftübertragungsmittel (32) aufweist, das mit der jeweiligen Spannbacke (5, 6, 7, 8) lösbar verbunden ist.

## Geänderte Patentansprüche

### Geänderte Patentansprüche gemäss Regel 137(2) EPÜ.

1. Spannfutter (1), durch das Werkstücke (2) vereinzelt und zentriert zu deren Bearbeitung durch eine Werkzeugmaschine an dieser abgestützt sind,
- mit einem Futterkörper (3) und mindestens vier in diesem eingearbeiteten Führungsnuten (4), die radial ausgerichtet sind,
- mit mindestens vier Spannbacken (5, 6, 7, 8), die jeweils paarweise in einer X- oder Y-Ebene angeordnet und vereinzelt in eine der Führungsnuten (4) beweglich gelagert eingesetzt sind,
- mit einem in dem Futterkörper (3) gelagerten Antriebselement (9), durch das die vier Spannbacken (5, 6, 7, 8) synchron in Richtung des einzuspannenden Werkstückes (2) zugestellt oder von diesem wegbewegt sind,
- mit jeweils einer zwischen dem Antriebselement (9) und zwei benachbarten Spannbacken (5, 7 oder 6, 8) vorgesehenen Wippe (11), die einen Symmetrie-Mittelpunkt (12) aufweist, in den ein an dem Antriebselement (9) verschwenkbar gelagerter Bolzen (13) eingesetzt ist, um den die Wippe (11) in Abhängigkeit von der Anlage der Spannbacken (5, 6 oder 7, 8) an dem Werkstück (2) verschwenkbar ist,
**dadurch gekennzeichnet,**
**dass** zwischen dem Antriebselement (9) und der jeweiligen Spannbacke (5, 6, 7, 8) eine Keilstange (31) vorgesehen ist, die jeweils trieblich mit dem Antriebselement (9) und einer der Spannbacken (5, 6, 7, 8) gekoppelt ist wobei den Keilstangen (31) jeweils ein Kraftübertragungsmittel (32) zugeordnet ist, das jeweilige Kraftübertragungsmittel (32) der Keilstangen (31) als Schrägverzahnung ausgestaltet ist und an der der Keilstange (31) zugewandten Oberfläche der jeweiligen Spannbacke (5, 6, 7, 8) eine dazu korrespondierende Schrägverzahnung (33) eingearbeitet ist, die während des Bewegungsvorganges und des Spannzustandes der Spannbacken (5, 6, 7, 8) in einem formschlüssigen Eingriff miteinander stehen und wobei die Führungsnuten (4) der Spannbacken (5, 6, 7, 8) im Bereich der äußeren Mantelfläche des Futterkörpers (3) offen sind und die jeweilige Spannbacke (5, 6, 7, 8) aus dem Eingriff der Keilstange durch deren Verschiebung von der Spannbacke (5, 6, 7, 8) weg lösbar ist, derart, dass die jeweilige Spannbacke freigegeben und aus der jeweiligen Führungsnut (4) entfernbar bzw. in diese einschiebbar ist.

2. Spannfutter nach Anspruch 1 oder 2,
**dadurch gekennzeichnet,**
**dass** die Führungstasche (30) der jeweiligen Keilstange (31) tangential zu dem Zentrum (3`) des Futterkörpers (3) angeordnet ist.

3. Spannfutter nach einem der vorgenannten Ansprüche,
**dadurch gekennzeichnet,**
**dass** die jeweilige Keilstange (31) mittels eines Keilhakens (34), einer Schrägverzahnung oder mittels eines Befestigungsstiftes lageorientiert mit dem Antriebselement (9) verbunden ist, derart, dass die Bewegung des Antriebselement (9) die Bewegungsgrenzen der jeweiligen Keilstange (31) vorgibt bzw. diese begrenzt.

4. Spannfutter nach einem der vorgenannten Ansprüche,
**dadurch gekennzeichnet,**
**dass** die jeweilige Spannbacke (5, 6,7, 8) in der jeweiligen Führungsnut (4) mittels eines Arretierungsstiftes in Bezug auf einen gemeinsamen Grundkreis um das Zentrum (3') des Futterkörpers (3) festgesetzt ist, während die Schrägverzahnung (32) der Keilstange (31) außer Eingriff mit der Schrägverzahnung (10) der jeweiligen Spannbacke (5, 6,7, 8) ist.

5. Spannfutter nach einem der vorgenannten Ansprüche,
**dadurch gekennzeichnet,**
- **dass** seitlich benachbart zu dem Bolzen (13) ein Übertragungsstift (14, 15) angeordnet ist, der trieblich mit der Wippe (11) gekoppelt ist, und an dessen der Wippe (11) gegenüberliegenden Ende die jeweilige Spannbacke (5, 6, 7 oder 8) gelagert und abgestützt ist,
- **dass** zwischen der Wippe (11) und der jeweiligen Spannbacke (5, 6, 7 oder 8) ein Übertragungskeil (22) als Distanzüberbrückung angeordnet ist,
- und **dass** in dem Übertragungskeil (22) eine Durchgangsbohrung (24) eingebracht ist, die von dem jeweiligen Übertragungsstift (14, 15) durchgriffen ist bzw. durch diesen hindurchdringt.

6. Spannfutter nach einem der vorgenannten Ansprüche,
**dadurch gekennzeichnet,**
**dass** die Keilstange (31) in einer in dem Futterkörper (3) eingearbeiteten Führungstasche (30) axial beweglich gelagert ist,
und **dass** die jeweilige Keilstange (31) ein Kraftübertragungsmittel (32) aufweist, das mit der jeweiligen Spannbacke (5, 6, 7, 8) lösbar verbunden ist.
